# EUROPÄISCHE PATENTSCHRIFT

(11) **EP 3 743 391 B1**
(45) Veröffentlichungstag und Bekanntmachung des Hinweises auf die Patenterteilung: **02.03.2022**
(21) Anmeldenummer: 19703022.4
(22) Anmeldetag: 24.01.2019
(51) Int. Cl.: C03B 25/06, C03B 29/06

(54) **VORRICHTUNG UND VERFAHREN ZUR KONTINUIERLICHEN WÄRMEBEHANDLUNG VON PHARMAZEUTISCHEN GLASBEHÄLTERN**
DEVICE AND METHOD FOR CONTINUOUSLY THERMALLY TREATING PHARMACEUTICAL GLASS CONTAINERS
DISPOSITIF ET PROCÉDÉ DE TRAITEMENT THERMIQUE CONTINU DE RÉCIPIENTS EN VERRE PHARMACEUTIQUES

(30) Priorität: 26.01.2018 DE 102018101839
(43) Veröffentlichungstag der Anmeldung: 02.12.2020
(73) Patentinhaber: SCHOTT Schweiz AG, 9001 St. Gallen (CH)
(72) Erfinder: NUZZO, Daniele, 9320 Frasnacht (CH); HUHN, Roman, 9000 St. Gallen (CH); HAHN, Christian, 9403 Goldach (CH)
(74) Vertreter: Ullrich & Naumann PartG mbB
(86) Internationale Anmeldenummer: PCT/EP2019/051683
(87) Internationale Veröffentlichungsnummer: WO 2019/145385

(56) Entgegenhaltungen:
- FR-A- 931 464
- GB-A- 169 537
- JP-A- 2004 345 916
- US-A- 3 797 567

## Beschreibung

Die vorliegende Anmeldung beansprucht die Priorität der Deutschen Patentanmeldung "Vorrichtung und Verfahren zur kontinuierlichen Wärmebehandlung von pharmazeutischen Glasbehältern" Nr. 10 2018 101 839.8, angemeldet am 26. Januar 2018

### Gebiet der Erfindung

Die vorliegende Erfindung betrifft allgemein die Herstellung von pharmazeutischen Glasbehältern als Primär-Packmittel für pharmazeutische Wirkstoffe, beispielsweise von Glasfläschchen (Vials), Karpulen oder Spritzenkörpern, und betrifft insbesondere eine Vorrichtung und ein Verfahren zum Entspannen solcher Glasbehälter.

### Hintergrund der Erfindung

Aus dem Stand der Technik sind Verfahren zur kontinuierlichen Wärmebehandlung von pharmazeutischen Glasbehältern bekannt, um Restspannungen in dem Glasmaterial gezielt abzubauen. Üblicherweise durchlaufen die Glasbehälter hierzu zunächst eine Heizzone, in der die Glasbehälter auf eine maximale Temperatur erwärmt werden. Anschließend kühlen die Glasbehälter ohne aktive Kühlungsmaßnahmen auf Raumtemperatur herunter. Ohne aktive Kühlungsmaßnahmen sind die Bedingungen bei der Abkühlung jedoch unkontrolliert.

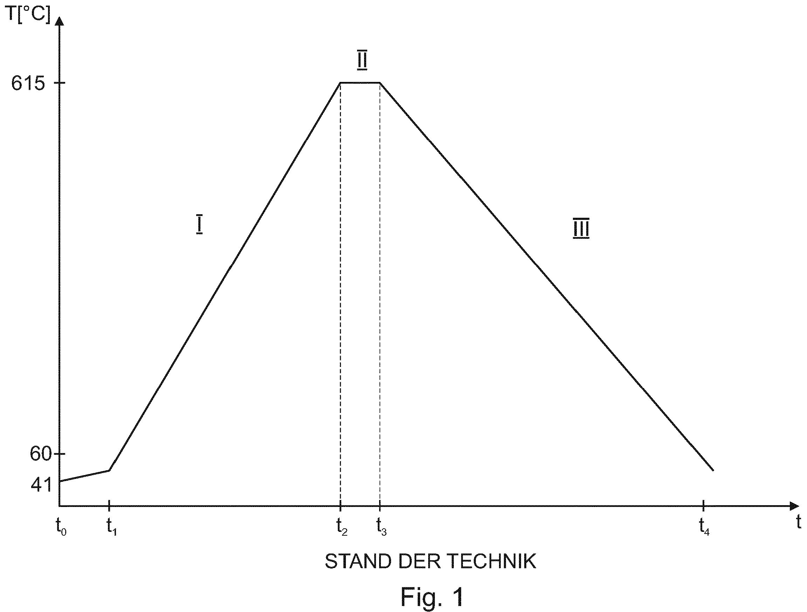

Die Fig. 1 zeigt ein typisches Temperaturprofil, das die Glasbehälter dabei in einem Entspannungsofen nach dem Stand der Technik durchlaufen, beispielsweise im Anschluss an einen Heissumformungsprozess, bei dem die Glasbehälter durch Heissumformung aus Glasrohren hergestellt werden. Dargestellt ist in der Fig. 1 dabei die Temperatur in der Heiz- und Abkühlzone aufgetragen über die Zeit, wobei die vorgenannten Temperatur die nicht mit der eigentlichen Temperatur der Glasbehälter verwechselt werden darf.

Zu Beginn der Wärmebehandlung befinden sich die Glasbehälter dabei häufig bereits nahezu wieder auf Raumtemperatur. Nach Einlaufen in einen Eintrittsbereich (Zeitraum t0 bis t1) wird die Temperatur in der Heizzone I möglichst rasch hochgefahren, bis eine maximale Temperatur erreicht ist, die im Falle eines Borosilikatglases beispielsweise etwa 615°C beträgt. Diese maximale Temperatur wird beispielsweise für Glasvials mit einem Nennvolumen von 2 ml während etwa 29 s aufrechterhalten (Zone II, Zeitraum t2 bis t3), also während einer sehr kurzen Zeit, damit zuverlässig verhindert ist, dass die Glastemperatur allzu lange über der Glasübergangstemperatur (Tg) liegt. Anschließend wird die Temperatur in der Zone III mit einer im Wesentlichen konstanten Abkühlrate heruntergefahren (Zeitraum t3 bis t4), was in der Fig. 1 durch einen linearen Temperaturverlauf dargestellt ist. Für Glasvials mit einem Nennvolumen von 2 ml dauert diese Abkühlung beispielsweise etwa 340 s.

EP 0 960 863 A2 offenbart eine Vorrichtung zur kontinuierlichen Wärmebehandlung von pharmazeutischen Glasbehältern, bei der die Glasbehälter zwischen einem Eintrittsbereich und einem Austrittsbereich mittels eines speziell gestalteten Förderbands gefördert werden. Die Glasbehälter durchlaufen dabei eine erste Heizzone, in der die Glasbehälter auf eine maximale Temperatur erwärmt werden, und im Anschluss daran eine Abkühlzonc, in der die Glasbehälter rasch abkühlen sollen. Dabei wird eine aktive Lüftung in der Abkühlzone eingesetzt, um die Abkühlrate zu erhöhen.

US 3259481 A offenbart eine Vorrichtung zur kontinuierlichen Wärmebehandlung von Glasbehältern mit einer Heizzone und einer Abkühlzone. . In einem ersten Bereich wird das abzukühlende Glasgut auf eine sehr hohe Temperatur gebracht. Anschließend erfolgt eine Abkühlung mit einer ersten Abkühlrate, die allmählich abnimmt. Anschließend erfolgt eine Abkühlung mit einer höheren Abkühlrate. Die Verwendung von induktiv erwärmbaren Trennplatten ist nicht offenbart.

US 1974058 A offenbart eine vergleichbare Vorrichtung. Die Verwendung von induktiv erwärmbaren Trennplatten ist nicht offenbart.

US 1071331 A offenbart eine weitere Vorrichtung zur kontinuierlichen Wärmebehandlung

von Glasbehältern, die als Heiztunnel ausgebildet ist. GB 169537 A offenbart eine weitere Vorrichtung mit Trennplatten zwischen der Brennkammer und den Glasbehältern.

Die Heizelemente zum Erwärmen der Glasbehälter sind üblicherweise unter einem geringen Abstand unmittelbar über dem Förderband angeordnet. Temperaturschwankungen der Heizelemente führen deshalb unmittelbar zu Prozessschwankungen beim Entspannen der Glasbehälter. Weil die Heizelemente in ihrer unmittelbaren Umgebung sehr hohe Temperaturgradienten bewirken, sind auch die Anforderungen an die benachbarten Materialien sehr hoch, was häufig in Materialabplatzungen und Verunreinigungen der darunter geführten Glasbehälter resultiert.

Im Hinblick auf die weiter steigenden Anforderungen an die Produktqualität von Glasbehältnissen zur Verwendung als Primär-Packmittel für pharmazeutische Wirkstoffe ist jedoch auch auf ein geeignetes Spannungsprofil in dem Material der Glasbehälter zu achten. Somit besteht weiterer Verbesserungsbedarf bei der kontinuierlichen Wärmebehandlung von pharmazeutischen Glasbehältern.

### Zusammenfassung der Erfindung

Aufgabe der vorliegenden Erfindung ist es, die Bedingungen bei der kontinuierlichen Wärmebehandlung von pharmazeutischen Glasbehältern weiter zu verbessern. Insbesondere ist es Aufgabe der vorliegenden Erfindung, ein verbessertes Verfahren und eine verbesserte Vorrichtung zur kontinuierlichen Wärmebehandlung von pharmazeutischen Glasbehältern bereitzustellen, womit eine Wärmebehandlung unter gleichbleibenden Bedingungen bei reduzierter Gefahr von Verunreinigungen möglich ist.

Diese Aufgabe wird durch eine Vorrichtung nach Anspruch 1 und durch ein Verfahren nach Anspruch 9 gelöst. Weitere vorteilhafte Ausführungsformen sind Gegenstand der rückbezogenen Unteransprüche.

Gemäß der vorliegenden Erfindung wird ein Verfahren zur kontinuierlichen Wärmebehandlung von pharmazeutischen Glasbehältern bereitgestellt, bei dem die Glasbehälter mittels einer Fördereinrichtung kontinuierlich von einem Eintrittsbereich zu einem Austrittsbereich gefördert werden, wobei die Glasbehälter zwischen dem Eintrittsbereich und dem Austrittsbereich zunächst eine Heizzone durchlaufen, in der die Glasbehälter auf eine maximale Temperatur erwärmt werden, und im Anschluss an die Heizzone eine erste Abkühlzone durchlaufen, in der die Glasbehälter mit einer ersten Abkühlrate abkühlen.

Erfindungsgemäß ist zumindest eine Trennplatte aus einem elektrisch leitfähigen Material oberhalb der Fördereinrichtung oder oberhalb und unterhalb der Fördereinrichtung vorgesehen, um die Glasbehälter in der Heizzone und zumindest in der ersten Abkühlzone von Heizeinrichtungen oder kombinierten Heiz- und Kühleinrichtungen zu trennen und ein Eindringen von Verunreinigungen in den Förderspalt zu verhindern, wobei die zumindest eine Trennplatte durch die Heizeinrichtungen oder kombinierten Heiz- und Kühleinrichtungen induktiv erwärmt wird, um den Glasbehältern in der Heizzone und zumindest in der ersten Abkühlzone Wärme zuzuführen.

Erfindungsgemäß können somit keine Verunreinigungen, beispielsweise Materialabplatzungen von Heizelementen oder ihrer unmittelbaren Umgebung, in Kontakt mit den Glasbehältern gelangen. Verunreinigungen oder gar mechanische Beschädigungen der Glasbehälter können so wirkungsvoll verhindert werden. Zu diesem Zweck ist zumindest die Trennplatte oberhalb der Fördereinrichtung bevorzugt durchgängig und ohne Unterbrechungen oder Öffnungen ausgebildet.

Dabei bestehen die Trennplatten aus einem elektrisch leitfähigen Material, insbesondere aus einem stromleitenden Metall, sodass diese durch die Heizeinrichtungen oder kombinierten Heiz- und Kühleinrichtungen induktiv, durch die in ihnen erzeugten Wirbelstromverluste, beheizt werden können. Die Heizelemente können so unmittelbar oberhalb bzw. unterhalb der bewegten Glasbehälter angeordnet sein, um einen vergleichsweise schmalen Förderspalt abzudecken und räumlich von den Heizeinrichtungen oder kombinierten Heiz- und Kühleinrichtungen zu trennen. Der vergleichsweise geringe Abstand hilft Energiekosten zu sparen und verkürzt Zeitverzögerungen bei einer Regelung oder Steuerung der Temperaturprofile. Bei Wahl einer induktiven Beheizung können insbesondere besonders aggressive Temperaturprofile mit hohen Temperaturänderungsraten gefahren werden, um die Glasbehälter in der Heizzone und der ersten Abkühlzone sehr rasch zu erwärmen.

Gemäß einer weiteren Ausführungsform durchlaufen die Glasbehälter im Anschluss an die erste Abkühlzone und vor Erreichen des Austrittsbereichs eine zweite Abkühlzone, in der die Glasbehälter mit einer zweiten Abkühlrate abkühlen, die höher ist als die erste Abkühlrate.

Durch Verwendung von zwei unmittelbar aufeinanderfolgenden Abkühlzonen können die Bedingungen bei der Entspannung der Glasbehälter geeigneter eingestellt werden. Dabei wird darauf geachtet, dass die Abkühlung der Glasbehälter bei Temperaturen oberhalb des unteren Kühlpunktes relativ langsam erfolgt, weil die Plastizität des Glases in diesem Temperaturbereich während der Abkühlung zunehmend verloren geht. Folglich muss die Abkühlung des Glases möglichst homogen erfolgen, um keine neuen Eigenspannungen in das Glas einzubringen. Nach Unterschreiten des unteren Kühlpunktes kann sich das Glas quasi nur noch elastisch verformen, sodass nach Unterschreiten des unteren Kühlpunktes erfindungsgemäß eine sehr viel höhere zweite Abkühlrate eingestellt werden kann. Somit wird in der ersten Abkühlzone die erste Abkühlrate relativ niedrig gewählt, sodass nahezu keine neuen Eigenspannungen in das Glas durch eine zu schnelle Abkühlung eingebracht werden. Zweckmäßig werden die thermischen Bedingungen in der ersten Abkühlzone insbesondere so gewählt, dass keine neuen (sekundären) Eigenspannungen durch eine zu schnelle Abkühlung beim Durchlaufen der ersten Abkühlzone induziert werden. Insbesondere auch so, dass die Restspannung in den Glasbehältern bei Verlassen der ersten Abkühlzone einen Grenzwert von 2-3 MPa nicht überschreitet.

Nach Verlassen der ersten Abkühlzone, also nachdem die Temperatur der Glasbehälter den unteren Kühlpunkt geringfügig unterschritten hat, wird eine deutlich höhere zweite Abkühlrate gewählt, sodass die Glasbehälter möglichst rasch, aber ohne Aufbau zusätzlicher Spannungen im Material auf etwa Raumtemperatur herunter gekühlt werden, insbesondere auf eine Temperatur in einem Bereich zwischen etwa 20°C und etwa 100°C.

Auf diese Weise kann erfindungsgemäß die Gesamtlänge des Entspannungsofens minimiert werden. Berücksichtigt man, dass die Glasbehälter den Entspannungsofen mittels eines Förderbands mit konstanter Geschwindigkeit durchlaufen, entspricht eine kürzere Gesamtzeit zum Entspannen einer kürzeren Gesamtlänge des Entspannungsofens, was Platz sparen hilft. Diese Platzersparnis kann erfindungsgemäß erheblich sein.

Auf diese Weise kann jedoch auch die Zeitdauer reduziert werden, die benötigt wird, um anhand der Ergebnisse einer Inspektion der abgekühlten Glasbehälter, insbesondere einer Videoinspektion, die stromabwärts von dem Entspannungsofen erfolgt, Prozessparameter der stromaufwärts befindlichen Heissformgebungsmaschine geeignet zu ändern, wenn dies anhand der Ergebnisse der Inspektion für erforderlich gehalten wird. Bis zur Inspektion haben bereits eine Vielzahl von Glasbehältern den Entspannungsofen durchlaufen, die ggf. nicht über die geeignete Qualität verfügen. Weil aufgrund der erfindungsgemäß möglichen kürzeren Gesamtlänge des Entspannungsofens schneller auf Qualitätsänderungen der Glasbehälter reagiert werden kann, kann so erfindungsgemäß auch der Ausschuss reduziert werden und eine gleichbleibend hohe Qualität der Glasbehälter gewährleistet werden.

Gemäß einer weiteren Ausführungsform wird die Trennplatte durch die Heizeinrichtungen oder kombinierten Heiz- und Kühleinrichtungen induktiv erwärmt, um den Glasbehältern in der Heizzone und zumindest in der ersten Abkühlzone Wärme zuzuführen. Die Trennplatten führen aufgrund ihrer relativ hohen Masse zu einer weiteren Vergleichmäßigung der Temperaturverhältnisse sowohl in Förderrichtung der Glasbehälter als auch senkrecht dazu. Somit können erfindungsgemäß sehr viel homogenere Temperaturbedingungen in den Heiz- und Abkühlzonen eingestellt werden. Hierzu ist bevorzugt, wenn die Trennplatten über eine ausreichende thermische Masse verfügen.

Gemäß einer weiteren Ausführungsform werden die Glasbehälter in der Heizzone so erwärmt werden, dass die Temperatur der Glasbehälter für kurze Zeit höher als die Glasübergangstemperatur ist. In diesem Bereich können Restspannungen im Glas besonders effektiv abgebaut werden. Die vorgenannte Zeitdauer ist dabei von der Größenordnung von nur wenigen Sekunden, beträgt beispielsweise maximal 3 Sekunden oder bevorzugter maximal 2 Sekunden, was von Parametern der Glasbehälter, insbesondere von deren Wandstärke, abhängig ist, also von der Zeitdauer, bis die sehr hohe Temperaturen auch die Innenoberfläche der Glasbehälter erreicht hat.

Gemäß einer weiteren Ausführungsform ist die Umgebungstemperatur in der Heizzone mindestens um 65 °C, bevorzugter mindestens um 85 °C höher als die Glasübergangstemperatur. Im Falle eines Borosilikatglases kann die Umgebungstemperatur in der Heizzone mindestens 590 °C und bevorzugter mindestens 605 °C betragen. Aus Versuchen für Vials wurden geeignete Umgebungstemperaturen im Bereich 630 °C bis 660 °C in der Heizzone ermittelt, was insbesondere auch abhängig von Vialgrösse und Taktrate ist, was einer Temperaturdifferenz von 65 °C bis 95 °C zu Tg (565 °C) entspricht. Aufgrund der aggressiv gefahren Temperaturbedingungen erreichen die Glasbehälter ihre maximale Temperatur besonders rasch, was in einer weiteren Reduzierung der Gesamtlänge des Entspannungsofens resultiert. Dabei kann die Temperatur in der Heizzone, welche die Glasbehälter durchlaufen, während einer Zeitdauer von maximal 25s, bevorzugter während einer Zeitdauer von maximal 20s, höher sein als die Glasübergangstemperatur.

Gemäß einer weiteren Ausführungsform kühlen die Glasbehälter in der ersten Abkühlzone auf eine Temperatur ab, die dem unteren Kühlpunkt entspricht oder diese geringfügig unterschreitet, beispielsweise um wenige °C. Genauer gesagt werden das Temperaturprofil in der ersten Abkühlzone, die Gesamtlänge der ersten Abkühlzone und die Fördergeschwindigkeit der Glasbehälter so aufeinander abgestimmt, dass der untere Kühlpunkt zum Ende der ersten Abkühlzone erreicht ist. So kann auch die Gesamtlänge der ersten Abkühlzone weiter reduziert werden. Das Temperaturprofil in der ersten Abkühlzone wird dabei zweckmäßig so gewählt, dass Restspannungen im Glas einen vorbestimmten Grenzwert von beispielsweise 2-3 MPa nicht überschreiten.

Gemäß einer weiteren Ausführungsform ist die erste Abkühlzone in mindestens zwei, bevorzugt in mindestens drei Abkühl-Unterzonen mit jeweils konstanten Temperaturen von zugeordneten kombinierten Heiz- und Kühleinrichtungen unterteilt, in denen die Temperatur der Glasbehälter schrittweise in den Bereich des unteren Kühlpunktes abgesenkt wird. Gemäß einer weiteren Ausführungsform sind die Abkühl-Unterzonen der ersten Abkühlzone voneinander thermisch getrennt sind, beispielsweise mit Hilfe von Abtrennungen in Gestalt von Blechen oder Platten, die ausgelegt sind, um eine Konvektion zwischen den Abkühl-Unterzonen zu verhindern oder zumindest deutlich zu verringern, sodass die Temperaturen so gebildeten Unterzonen der ersten Abkühlzone im Wesentlichen unabhängig voneinander eingestellt werden können. Dabei ist eine Temperaturdifferenz zwischen der Umgebungstemperatur in einer, in Förderrichtung betrachtet, ersten Abkühl-Unterzone und der Umgebungstemperatur in der Heizzone größer als eine Temperaturdifferenz zwischen der Umgebungstemperatur in der in Förderrichtung betrachtet, ersten Abkühl-Unterzone und einer benachbarten zweiten Abkühl-Unterzone oder eine Temperaturdifferenz der Umgebungstemperaturen in zwei benachbarten Abkühl-Unterzonen. Mit anderen Worten: den größten Temperatursprung in der Temperatur erfahren die Glasbehälter in der, in Förderrichtung betrachtet, ersten Unterzone der ersten Abkühlzone. Bei Eintritt in die nachfolgenden Unterzonen der ersten Abkühlzone erfahren die Glasbehälter weitere Temperatursprünge in der Temperatur, die jedoch jeweils kleiner werden.

Gemäß einer weiteren Ausführungsform wird die Temperatur in der ersten Abkühlzone, insbesondere in den Abkühl-Unterzonen der ersten Abkühlzone, nicht durch aktives Kühlen, beispielsweise durch einen kühlenden Luftstrom, abgesenkt. Vielmehr wird die Temperatur durch Regeln von Heizeinrichtungen oberhalb und/oder unterhalb der Fördereinrichtung geeignet eingestellt.

Gemäß einer weiteren Ausführungsform ist die zweite Abkühlrate in der zweiten Abkühlzone so eingestellt, dass der Aufbau von zusätzlichen Spannungen im Glas der Glasbehälter beim Abkühlen in der zweiten Abkühlzone vermieden ist.

Gemäß einer weiteren Ausführungsform wird die Temperatur in der zweiten Abkühlzone aktiv durch einen Luftstrom in einem geschlossen Luftkreislauf abgesenkt. So kann die Gesamtlänge der zweiten Abkühlzone weiter reduziert werden, weil sich mit einer aktiven Kühlung durch eine Luftströmung höhere Abkühlraten erzielen lassen. Bevorzugt wird zu diesem Zweck durch die zweite Abkühlzone eine Luftströmung geeignet geführt und gesteuert oder geregelt. Dabei kann die zweite Abkühlrate durch Variieren eines Luftstroms in dem geschlossenen Luftkreislauf und/oder durch Hinzuschaltung von Wärmetauschern geeignet eingestellt werden. Ferner kann ein Luftstrom in dem geschlossenen Luftkreislauf gefiltert werden, um eine Partikellast in der zweiten Abkühlzone zu reduzieren.

Gemäß einer weiteren Ausführungsform liegt eine Verweildauer der Glasbehälter in der ersten Abkühlzone im Bereich zwischen 73 s und 93 s, bevorzugter im Bereich zwischen 78 s und 88 s. Dabei kann die Verweildauer der Glasbehälter in der zweiten Abkühlzone im Bereich zwischen 87 s und 117 s, bevorzugter im Bereich zwischen 95 s und 109 s liegen.

Gemäß einem weiteren Gesichtspunkt der vorliegenden Erfindung wird eine entsprechende Vorrichtung zur kontinuierlichen Wärmebehandlung von pharmazeutischen Glasbehältern, die zum Ausführen des hierin offenbarten Verfahrens ausgelegt ist.

Ein weiterer Gesichtspunkt der vorliegenden Erfindung betrifft die Verwendung eines Verfahrens bzw. einer Vorrichtung, wie hierin offenbart, zur kontinuierlichen Wärmebehandlung von pharmazeutischen Glasbehältern, insbesondere von Vials, Karpulen oder Spritzenkörpern aus Glas.

### Figurenübersicht

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: ein Temperaturprofil bei einem Verfahren zur kontinuierlichen Wärmebehandlung von pharmazeutischen Glasbehältern gemäß dem Stand der Technik;
- Fig. 2: ein Temperaturprofil bei einem Verfahren zur kontinuierlichen Wärmebehandlung von pharmazeutischen Glasbehältern gemäß der vorliegenden Erfindung; und
- Fig. 3: in einer schematischen Seitenansicht eine Vorrichtung zur kontinuierlichen Wärmebehandlung von pharmazeutischen Glasbehältern gemäß der vorliegenden Erfindung.

In den Figuren bezeichnen identische Bezugszeichen identische oder im Wesentlichen gleichwirkende Elemente oder Elementgruppen.

### Ausführliche Beschreibung von bevorzugten Ausführungsbeispielen

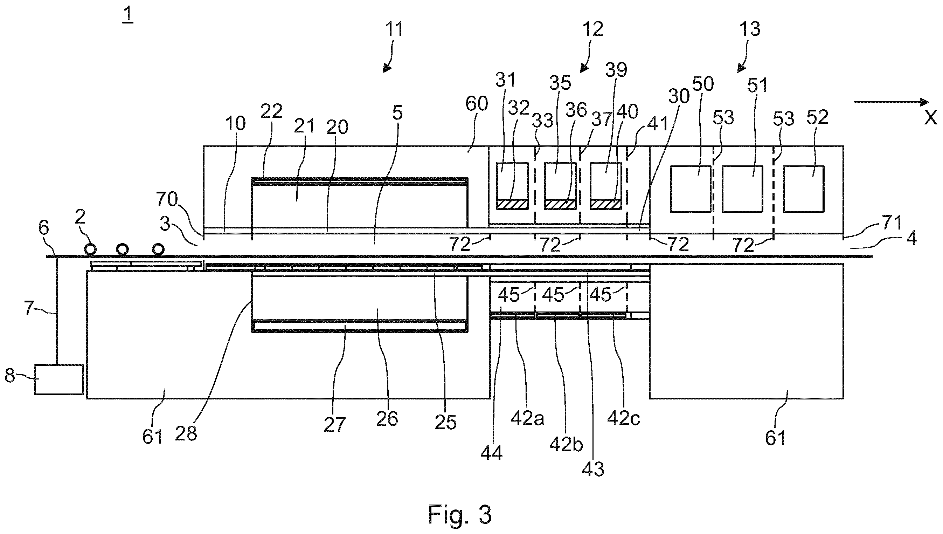

Zunächst wird anhand der Fig. 3 anhand einer schematischen Seitenansicht der allgemeine Aufbau einer Vorrichtung zur kontinuierlichen Wärmebehandlung von pharmazeutischen Glasbehältern gemäß der vorliegenden Erfindung beschrieben.

Zur kontinuierlichen Wärmebehandlung durchlaufen die Glasbehälter 2 auf einem Förderband 6 einen Entspannungsofen 1, in der Fig. 3 in der Fördereinrichtung x von links nach rechts. Das Förderband 6 ist mechanisch mit dem Antriebsmotor 8 gekoppelt. Die Fördergeschwindigkeit ist zweckmäßig konstant, kann jedoch geeignet eingestellt werden.

Im Eintrittsbereich 3 befinden sich die Glasbehälter 2 im Wesentlichen auf Raumtemperatur, je nach dem Abstand zur stromaufwärts angeordneten Heissformgebungsvorrichtung (nicht gezeigt), in der die Glasbehälter 2 durch Heissumformung aus einem Glasrohr hergestellt werden. Die Glasbehälter 2 durchlaufen auf ihrer Förderstrecke durch den Entspannungsofen 1 einen Spalt 5 von geringer Höhe. Entlang der Förderstrecke sind Zonen mit unterschiedlichen Temperaturen angeordnet, wie nachfolgend ausgeführt. Blenden 72, die jedenfalls oberhalb der Fördereinrichtung angeordnet sind, sorgen für eine thermische Trennung der verschiedenen thermischen Zonen 11-13 im Entspannungsofen. Hierzu bilden die Blenden zwischen den einzelnen Zonen 11-13 vergleichsweise schmale Spalte in vertikaler Richtung. Auch innerhalb der Zonen 11-13 können thermische Unterzonen ausgebildet sein, wie nachfolgend beschrieben. Nach Durchlaufen des Entspannungsofens 1 verlassen die Glasbehälter 2 den Entspannungsofen 1 im Austrittsbereich 4.

Nach Eintritt in den Entspannungsofen 1 durchlaufen die Glasbehälter 2 zunächst eine relativ kurze Vorwärmzone 10, bevor diese in die Heizzone 11 gelangen. Oberhalb und unterhalb der Fördereinrichtung sind Heizelemente 22, 27 angeordnet. Erfindungsgemäß sind die Heizelemente 22, 27 nicht in unmittelbarer Nähe zur Fördereinrichtung 6 angeordnet, um die Wärme herkömmlich direkt an die Glasbehälter 2 abzugeben. Vielmehr ist erfindungsgemäß der Abstand zwischen den Heizelemente 22, 27 und der Fördereinrichtung 6 vergleichsweise groß, sodass zwischen den Heizelemente 22, 27 und der Fördereinrichtung 6 ein Heizraum 21, 26 ausgebildet ist, der einer weiteren Vergleichmäßigung der Temperaturbedingungen dient. Die Heizräume 22, 27 sind über eine jeweilige Heiz- bzw. Trennplatte 20, 25 von der Fördereinrichtung 6 räumlich getrennt. So können insbesondere keine Verunreinigungen, wie beispielsweise Materialabplatzungen, von den Heizelementen 22, 27 auf die Fördereinrichtung 6 und die darauf befindlichen Glasbehälter 2 gelangen, sodass der Eintritt von Verunreinigungen in die Glasbehälter 2 verhindert ist. Die Heiz- bzw. Trennplatten 20, 25 verfügen über eine ausreichende thermische Masse, um die Temperaturbedingungen im Bereich der Heizzone 11 in der Förderrichtung x und quer dazu zu vergleichmäßigen. Hierzu können die Heiz- bzw. Trennplatten 20, 25 insbesondere aus einem Metall einer hohen elektrischen Leitfähigkeit und Wärmeleitfähigkeit bestehen. Ganz besonders bevorzugt werden die Heiz- bzw. Trennplatten 20, 25 mittels der Heizelemente 22, 27 induktiv durch in Ihnen erzeugte Wirbelstromverluste erwärmt.

Gemäß einer bevorzugten Ausführungsform ist gemäß der vorliegenden Erfindung eine Heiz- bzw. Trennplatte 20, wie in der Fig. 3 dargestellt, in der Heizzone 11 zumindest oberhalb der Fördereinrichtung 6 angeordnet, um den Eintritt von Verunreinigungen, die von oben her herabfallen, in die Glasbehälter 2 zu verhindern. Gemäß einer alternativen Ausführungsform ist eine Heiz- bzw. Trennplatte 25, wie in der Fig. 3 dargestellt, in der Heizzone 11 zumindest unterhalb der Fördereinrichtung 6 angeordnet, um die Glasbehälter 2 gegen den Eintritt von Verunreinigungen zu schützen. Gemäß einer weiteren Ausführungsform können in der Heizzone 11 Heiz- bzw. Trennplatten 20, 25, wie in der Fig. 3 dargestellt, sowohl oberhalb der Fördereinrichtung 6 als auch unterhalb der Fördereinrichtung 6 angeordnet sein. Dabei ist zumindest die Trennplatte 20, die oberhalb der Fördereinrichtung 6 angeordnet ist, jedenfalls oberhalb der Fördereinrichtung 6 durchgängig und ohne Unterbrechungen oder Öffnungen ausgebildet. Noch bevorzugter sind beiden Trennplatten 20, 25 in diesem Sinne durchgängig und ohne Unterbrechungen oder Öffnungen ausgebildet.

Die Temperaturen der Heizelemente 22, 27 können in der Heizzone 11, in der Förderrichtung x betrachtet, konstant sein, sodass die Temperatur der bewegten Glasbehälter 2 mit einer konstanten Heizrate erwärmt werden. Grundsätzlich können die Heizelemente 22, 27 in der Heizzone 11 auch ein beispielsweise rampenförmiges Temperaturprofil in der Förderrichtung x fahren. Die Heizelemente 22, 27 in der Heizzone 11 werden so betrieben, um eine möglichst rasche Erwärmung der Glasbehälter 2 zu bewirken, was zur Verkürzung der Gesamtlänge des Entspannungsofens in der Förderrichtung x beiträgt. Die Länge der Heizzone 11 ist so bemessen und die Fördergeschwindigkeit der Fördereinrichtung so gewählt, dass die Glasbehälter am Ende der Heizzone 11 die gewünschte Temperatur erreicht haben.

Im Anschluss an die Heizzone 11 durchlaufen die Glasbehälter 2 eine erste Abkühlzone 12, in der die Glasbehälter 2 mit einer ersten Abkühlrate abkühlen. Wie man der Fig. 3 entnehmen kann, bilden die Heiz- und Kühlmodule 31, 35, 40 in der ersten Abkühlzone 12 beispielsweise drei aufeinanderfolgende thermische Zonen, die in der vorstehend beschriebenen Art mittels Blenden 72 und Abtrennungen 33, 37, 41 thermisch bestmöglich voneinander getrennt sind. Auch in der ersten Abkühlzone 12 sind die Heiz- und Kühlmodule 31, 35, 40 und die Heizelemente 42a-42c zweckmäßig nicht unmittelbar oberhalb bzw. unterhalb der Fördereinrichtung 6 angeordnet. Vielmehr sind die Heiz- und Kühlmodule 31, 35, 40 und die Heizelemente 42a-42c über eine jeweilige Heiz- bzw. Trennplatte 30, 43 von der Fördereinrichtung 6 räumlich getrennt. So können insbesondere keine Verunreinigungen, wie beispielsweise Materialabplatzungen, von den Heiz- und Kühlmodulen 31, 35, 40 und den Heizelementen 42a-42c auf die Fördereinrichtung 6 und die darauf befindlichen Glasbehälter 2 gelangen, sodass der Eintritt von Verunreinigungen in die Glasbehälter 2 verhindert ist. Die Heiz- bzw. Trennplatten 30, 43 verfügen über eine ausreichende thermische Masse, um die Temperaturbedingungen im Bereich der Heizzone 11 in der Förderrichtung x und quer dazu zu vergleichmäßigen. Hierzu können die Heiz- bzw. Trennplatten 30, 43 insbesondere aus einem Metall einer hohen elektrischen Leitfähigkeit und Wärmeleitfähigkeit bestehen. Grundsätzlich können auch in der ersten Abkühlzone 12 die Heiz- und Kühlmodule 31, 35, 40 und die Heizelemente 42a-42c die Heiz- bzw. Trennplatten 30, 43 induktiv durch Wirbelstromverluste erwärmen.

Gemäß einer bevorzugten Ausführungsform ist gemäß der vorliegenden Erfindung eine Heiz- bzw. Trennplatte 30, wie in der Fig. 3 dargestellt, ersten Abkühlzone 12 zumindest oberhalb der Fördereinrichtung 6 angeordnet, um den Eintritt von Verunreinigungen, die von oben her herabfallen, in die Glasbehälter 2 zu verhindern. Gemäß einer alternativen Ausführungsform ist eine Heiz- bzw. Trennplatte 43, wie in der Fig. 3 dargestellt, ersten Abkühlzone 12 zumindest unterhalb der Fördereinrichtung 6 angeordnet, um die Glasbehälter 2 gegen den Eintritt von Verunreinigungen zu schützen. Gemäß einer weiteren Ausführungsform können ersten Abkühlzone 12 Heiz- bzw. Trennplatten 30, 43, wie in der Fig. 3 dargestellt, sowohl oberhalb der Fördereinrichtung 6 als auch unterhalb der Fördereinrichtung 6 angeordnet sein. Dabei ist zumindest die Trennplatte 30, die oberhalb der Fördereinrichtung 6 angeordnet ist, jedenfalls oberhalb der Fördereinrichtung 6 durchgängig und ohne Unterbrechungen oder Öffnungen ausgebildet. Noch bevorzugter sind beiden Trennplatten 30, 43 in diesem Sinne durchgängig und ohne Unterbrechungen oder Öffnungen ausgebildet.

Wie nachfolgend ausgeführt, wird die Temperatur in der ersten Abkühlzone 12 stufenweise heruntergefahren, mit einer Anzahl von Stufen, die der Anzahl von Zonen in der ersten Abkühlzone 12 entspricht.

Im Anschluss an die erste Abkühlzone 12 durchlaufen die Glasbehälter 2 eine zweite Abkühlzone 13, in der die Glasbehälter 2 mit einer zweiten Abkühlrate, die höher ist als die erste Abkühlrate, abkühlen. Wie man der Fig. 3 entnehmen kann, bilden die Kühlmodule 50-52 in der zweiten Abkühlzone 13 drei aufeinanderfolgende thermische Zonen, die in der vorstehend beschriebenen Art mittels Blenden 72 und Abtrennungen 53 thermisch bestmöglich voneinander getrennt sind. Auch in der zweiten Abkühlzone 13 können die Kühlmodule 50-52 über eine Trennplatte von der Fördereinrichtung räumlich getrennt sein, sodass keine Verunreinigungen auf die Fördereinrichtung 6 und die darauf befindlichen Glasbehälter 2 gelangen können und der Eintritt von Verunreinigungen in die Glasbehälter 2 verhindert ist. In den Kühlmodulen 50-52 kann Kühlluft zirkulieren, um die zweite Abkühlrate zu erhöhen. Die Luftströmungsrate kann mit Hilfe Ventilen oder Klappen oder auch mittels eines Ventilators mit variabler Leistung dabei geeignet eingestellt werden. Die Luftführung in der zweiten Abkühlzone 13 ist zweckmäßig so, dass kühlende Luft die Glasbehälter nicht unmittelbar überstreicht, um den Eintritt von Verunreinigungen in die Glasbehälter 2 zu verhindern.

Es sei darauf hingewiesen, dass der Kühlprozess geregelt ist und gewissen Schwankungen in der Temperatur unterliegt, die zwar relativ gering sind, die aber über die Zeit leicht veränderlich (dynamisch) sind. Somit ist die vorstehend ausgeführte "erste" bzw. "zweite" Abkühlrate durchaus nicht konstant, sondern umfasst gewisse minimale Schwankungen, die allerdings relativ gering im Vergleich zu der jeweiligen Abkühlrate sind. Diese Dynamik resultiert insbesondere aus dem Prinzip der Temperaturregelung in den unterschiedlichen Zonen (Zwei-Punkt-Regelung) sowie der Beschaffenheit des Glases bzw. des abzukühlenden Glasbehälters. So können Glasdickenschwankungen oder Schwankungen der Wanddicke der Glasbehälter eine unterschiedliche abgehende Strahlungswärme hervorrufen, welche durch Thermoelemente in den jeweiligen Temperaturzonen erfasst wird, was durch geeignete Regelung der Temperaturen in den jeweiligen Temperaturzonen ausgeglichen wird und zu gewissen Schwankungen der Abkühlraten führt.

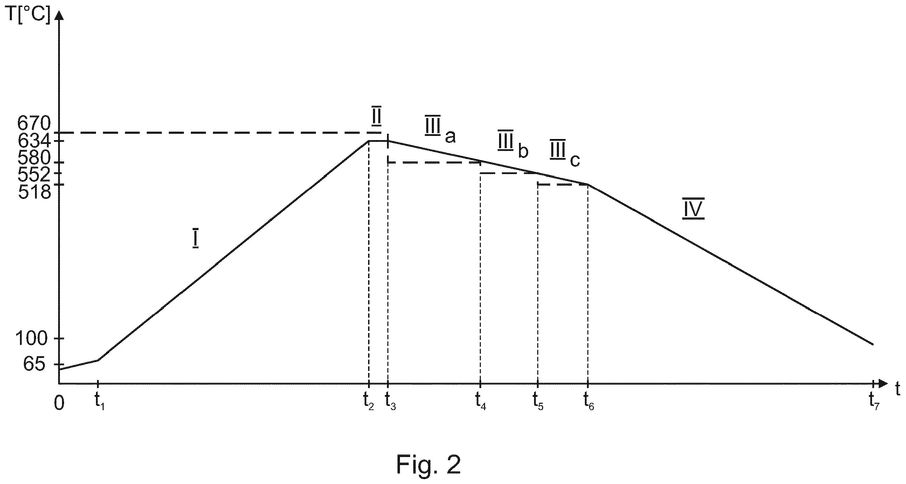

Nachfolgend wird anhand der Fig. 2 ein Temperaturprofil bei einem Verfahren zur kontinuierlichen Wärmebehandlung von pharmazeutischen Glasbehältern gemäß der vorliegenden Erfindung beschrieben. Der Fig. 2 ist dabei die Wärmebehandlung von Glasvials aus Fiolax^{®} zugrunde gelegt, mit einer Glasübergangstemperatur (T_{g}) von etwa 565°C. Dargestellt sind in der Fig. 2 die Temperaturen der Glasbehälter (durchgezogene Linie) und die Umgebungstemperatur in der jeweiligen thermischen Zone (gestrichelte Linie), die identisch zur Temperatur im Heizraum zwischen der zugeordneten Heizeinrichtung und der Trenn- bzw. Heizplatte sein kann. Die in gestrichelten Linien dargestellte Temperatur entspricht dabei im Wesentlichen der Temperatur auf der Außenoberfläche der Glasbehälter, nicht aber einer Gleichgewichtstemperatur im Glasvolumen der Glasbehälter, weil die Glasbehälter relativ rasch durch die thermischen Zonen gefördert werden.

Nach Durchlaufen der Vorwärmzone (Zeitintervall 0 bis t1) wird die Temperatur der Glasbehälter in der Heizzone I bevorzugt linear auf eine maximale Temperatur hochgefahren, die etwa 634°C beträgt. Genauer gesagt wird diese Temperatur zum Ende der Heizzone I erreicht und während eines vorbestimmten Zeitintervalls II (t2 bis t3) konstant gehalten, was durch Anpassung der Heizbedingungen am Ende der Heizzone realisiert werden kann. Auf dieser maximalen Temperatur werden die Glasbehälter nur für eine sehr kurze Zeit von beispielsweise 2 s gehalten.

Anschließend treten die Glasbehälter in die erste Unterzone IIIa der ersten Abkühlzone ein. In dieser Unterzone IIIa beträgt die Umgebungstemperatur im zugeordneten Heizraum zwischen erstem Heiz- und Kühlmodul 31 (vgl. Fig. 3) und der darunter befindlichen Trennplatte 30 sowie zwischen dem Heizelement 42a unterhalb der Fördereinrichtung 6 und der dazwischen befindlichen Trennplatte 43 etwa 580°C. Die Zeitdauer t3 bis t4 entspricht etwa 40s und ist länger als die Zeitdauern t4 bis t5 und t5 bis t6, die zum Durchlaufen der nachfolgenden Unterzonen IIIb und IIIc benötigt wird.

Anschließend treten die Glasbehälter in die zweite Unterzone IIIb der ersten Abkühlzone ein. In dieser Unterzone IIIb beträgt die Umgebungstemperatur im zugeordneten Heizraum zwischen zweitem Heiz- und Kühlmodul 35 (vgl. Fig. 3) und der darunter befindlichen Trennplatte 30 sowie zwischen dem Heizelement 42b unterhalb der Fördereinrichtung 6 und der dazwischen befindlichen Trennplatte 43 etwa 550°C. Die Zeitdauer t4 bis t5 entspricht etwa 22s und ist kürzer als die Zeitdauer t3 bis t4, jedoch in etwa gleich lang wie die Zeitdauer t5 bis t6.

Anschließend treten die Glasbehälter in die dritte Unterzone IIIc der ersten Abkühlzone ein. In dieser Unterzone IIIc beträgt die Umgebungstemperatur im zugeordneten Heizraum zwischen drittem Heiz- und Kühlmodul 40 (vgl. Fig. 3) und der darunter befindlichen Trennplatte 30 sowie zwischen dem Heizelement 42c unterhalb der Fördereinrichtung 6 und der dazwischen befindlichen Trennplatte 43 etwa 518°C. Die Zeitdauer t5 bis t6 entspricht etwa 21s und ist kürzer als die Zeitdauer t3 bis t4, jedoch in etwa gleich lang wie die Zeitdauer t4 bis t5.

Gegen Ende der ersten Abkühlzone hat die Temperatur der Glasbehälter den unteren Kühlpunkt erreicht oder diesen geringfügig unterschritten. Oberhalb des unteren Kühlpunktes geht die Plastizität des Glases während der Abkühlung zunehmend verloren und es muss folglich eine möglichst homogene Abkühlung des Glases erfolgen. Deshalb wird in der ersten Abkühlzone die erste Abkühlrate relativ niedrig gewählt, sodass nahezu keine neuen (sekundären) Eigenspannungen in das Glas durch eine zu schnelle Abkühlung eingebracht werden. Die thermischen Bedingungen in der ersten Abkühlzone werden insbesondere so gewählt, dass die Restspannung in den Glasbehältern bei Verlassen der ersten Abkühlzone einen Grenzwert von 2-3 MPa nicht überschreitet.

Dabei wird darauf geachtet, dass die Abkühlung der Glasbehälter bei Temperaturen oberhalb des unteren Kühlpunktes relativ langsam erfolgt, weil die Plastizität des Glases in diesem Temperaturbereich während der Abkühlung zunehmend verloren geht. Nach Unterschreiten des unteren Kühlpunktes kann sich das Glas quasi nur noch elastisch verformen, sodass nach Unterschreiten des unteren Kühlpunktes erfindungsgemäß eine sehr viel höhere zweite Abkühlrate eingestellt werden kann.

Nach Verlassen der ersten Abkühlzone, also nachdem die Temperatur der Glasbehälter den unteren Kühlpunkt geringfügig unterschritten hat, wird eine deutlich höhere zweite Abkühlrate gewählt, sodass die Glasbehälter möglichst rasch, aber ohne Aufbau zusätzlicher Spannungen im Material auf Raumtemperatur oder auf eine Temperatur im Bereich zwischen etwa 20 °C und etwa 100 °C herunter gekühlt werden. So kann die Gesamtlänge des Entspannungsofens minimiert werden, was nicht nur Platz sparen hilft sondern auch die Zeitdauer reduziert, die benötigt wird, um anhand der Ergebnisse eine Inspektion der abgekühlten Glasbehälter, insbesondere anhand einer Videoinspektion der abgekühlten Glasbehälter, Prozessparameter der stromaufwärts befindlichen Heissformgebungsmaschine geeignet zu ändern. So kann erfindungsgemäß auch der Ausschuss reduziert werden und eine gleichbleibend hohe Qualität der Glasbehälter gewährleistet werden.

Die Zeitdauer t6 bis t7 zum Durchlaufen der zweiten Abkühlzone IV beträgt gemäß der Fig. 2 etwa 102s.

Wie man der Fig. 2 entnehmen kann, wird in der zweiten Abkühlzone IV bevorzugt ausschließlich gekühlt, sodass für die zweite Abkühlzone IV keine Umgebungstemperatur eines Heizraums mehr dargestellt ist.

Wie man den Figuren 2 und 3 entnehmen kann, ist die Umgebungstemperatur im Heizraum 21, 26 der Heizzone 11 mindestens um 65 °C, bevorzugter mindestens um 85 °C höher als die Glasübergangstemperatur (T_{g}). Im Falle eines Borosilikatglases kann die Umgebungstemperatur in der Heizzone mindestens 590 °C und bevorzugter mindestens 605 °C betragen. Aus Versuchen für Vials wurden geeignete Umgebungstemperaturen im Bereich 630 °C bis 660 °C in der Heizzone ermittelt, was insbesondere auch abhängig von Vialgrösse und Taktrate ist, was einer Temperaturdifferenz von 65 °C bis 95 °C zu Tg (565 °C) entspricht.

Dabei ist die Temperatur der Glasbehälter 2, insbesondere eine Oberflächentemperatur der Glasbehälter 2, in der Heizzone 11 während einer Zeitdauer von maximal 25s, bevorzugter während einer Zeitdauer von maximal 20s, höher ist als die Glasübergangstemperatur (T_{g}).

Die erste Abkühlzone 12 ist bei dem dargestellten Ausführungsbeispiel in drei Abkühl-Unterzonen IIa, IIb, IIc mit jeweils konstanten Umgebungstemperaturen in den Unterzonen bzw. zugeordneten Heizräumen unterteilt. In den Abkühl-Unterzonen IIa, IIb, IIc wird die Temperatur der Glasbehälter 2 schrittweise bis auf den unteren Kühlpunkt abgesenkt. Die Temperaturdifferenz zwischen der Umgebungstemperatur in der ersten Abkühl-Unterzone IIa bzw. der Umgebungstemperatur des Heizraums der, in Förderrichtung (x) betrachtet, ersten kombinierten Heiz- und Kühleinrichtung 31 und der Umgebungstemperatur in der Heizzone 11 ist größer als die Temperaturdifferenz zwischen der Umgebungstemperatur in den beiden Abkühl-Unterzonen IIa, IIb bzw. der Umgebungstemperatur der Heizräume der in Förderrichtung (x) betrachtet, ersten kombinierten Heiz- und Kühleinrichtung 31 und der benachbarten zweiten kombinierten Heiz- und Kühleinrichtung 35 oder die Temperaturdifferenz der Umgebungstemperaturen von beliebigen weiteren Paaren von benachbarten Abkühl-Unterzonen bzw. der Umgebungstemperaturen von kombinierten Heiz- und Kühleinrichtungen (beispielsweise 35, 39).

Wie dem Fachmann ohne weiteres ersichtlich sein wird, kann das vorgenannte Verfahren in entsprechender Weise auch für andere Typen von Glasbehältnissen angewendet werden, die durch Heissumformung aus Glasrohren hergestellt werden, insbesondere allgemein im Rahmen der Herstellung von Glas-Verpackungsmitteln, auch mit größeren Abmessungen als zur Aufbewahrung von pharmazeutischen Wirkstoffen üblich.

### Bezugszeichenliste

- 1: Entspannungsofen
- 2: Glasbehälter
- 3: Eintrittsbereich
- 4: Austrittsbereich
- 5: Spalt
- 6: Fördereinrichtung
- 7: Kopplung
- 8: Antriebsmotor

- 10: Vorwärmungszone
- 11: Heizzone
- 12: erste Abkühlzone
- 13: zweite Abkühlzone

- 20: Heizplatte
- 21: Heizraum
- 22: Heizelement
- 23: oberes Gehäuse

- 25: Heizplatte
- 26: Heizraum
- 27: Heizelement
- 28: unteres Gehäuse

- 30: Heizplatte
- 31: erstes Heiz- und Kühlmodul
- 32: Heizelement von erstem Heiz- und Kühlmodul 31
- 33: Abtrennung

- 35: zweites Heiz- und Kühlmodul
- 36: Heizelement von zweitem Heiz- und Kühlmodul 35
- 37: Abtrennung

- 39: drittes Heiz- und Kühlmodul
- 40: Heizelement von drittem Heiz- und Kühlmodul 31
- 41: Abtrennung

- 42a, 42b, 42c: Heizelement
- 43: Heizplatte
- 44: Innenvolumen
- 45: Abtrennung

- 50: erstes Kühlmodul
- 51: zweites Kühlmodul
- 52: drittes Kühlmodul
- 53: Abtrennung

- 60: Gehäuse
- 61: Gehäuse

- 70: Eintrittsblende
- 71: Austrittsblende
- 82: Blende

- x: Prozess-/Förderrichtung

## Patentansprüche

1. Vorrichtung zur kontinuierlichen Wärmebehandlung von pharmazeutischen Glasbehältem (2), mit
einem Gehäuse (60, 61), in dem ein kontinuierlicher Förderspalt (5) zwischen einem Eintrittsbereich (3) und einem Austrittsbereich (4) ausgebildet ist,
einer Fördereinrichtung (6), die ausgelegt ist, sodass die Glasbehälter (2) ohne gegenseitige Berührung auf einer Oberseite eines angetriebenen Fördermittels der Fördereinrichtung aufliegen und kontinuierlich von dem Eintrittsbereich (3) zu dem Austrittsbereich (4) in einer Förderrichtung (x) gefördert werden,
einer Heizzone (11), die ausgelegt ist, sodass die Glasbehälter beim Durchlaufen des Förderspalts in der Heizzone (11) auf eine maximale Temperatur erwärmt werden,
einer ersten Abkühlzone (12), die, in Förderrichtung (x) betrachtet, unmittelbar an die Heizzone (11) anschließt und ausgelegt ist, sodass die Glasbehälter beim Durchlaufen des Förderspalts in der ersten Abkühlzone (12) mit einer ersten Abkühlrate abkühlen,
und zumindest eine Trennplatte (20, 25, 30, 43), die oberhalb der Fördereinrichtung (6) oder oberhalb und unterhalb der Fördereinrichtung (6) vorgesehen ist, um die Glasbehälter (2) in der Heizzone (11) und zumindest in der ersten Abkühlzone (12) von Heizeinrichtungen (22, 27, 42a, 42b, 42c) oder kombinierten Heiz- und Kühleinrichtungen (31, 36, 39) zu trennen und den Eintritt von Verunreinigungen in den Förderspalt von oberhalb der Fördereinrichtung (6) oder von oberhalb und unterhalb der Fördereinrichtung (6) zu verhindern,
**dadurch gekennzeichnet, dass** die
zumindest eine Trennplatte (20, 25, 30, 43) aus einem elektrisch leitfähigen Material besteht, um durch die Heizeinrichtungen (22, 27, 42a, 42b, 42c) oder kombinierten Heiz- und Kühleinrichtungen (31, 36, 39) induktiv erwärmt zu werden und den Glasbehältem (2) in der Heizzone (11) und zumindest in der ersten Abkühlzone (12) Wärme zuzuführen.

2. Vorrichtung nach Anspruch 1, wobei die zumindest eine Trennplatte (20, 25, 30, 43) unter einem Abstand von maximal 20 cm, bevorzugter von maximal 10 cm, zu der Fördereinrichtung (6) angeordnet ist,
und/oder weiterhin umfassend eine zweite Abkühlzone (13), die unmittelbar an die erste Abkühlzone (12) anschließt und ausgelegt ist, sodass die Glasbehälter beim Durchlaufen des Förderspalts in der zweiten Abkühlzone (13) mit einer zweiten Abkühlrate abkühlen, die höher ist als die erste Abkühlrate.

3. Vorrichtung nach Anspruch 2, wobei die Heizeinrichtungen in der Heizzone (11) so ausgelegt sind, dass eine Umgebungstemperatur in der Heizzone erreichbar ist, die mindestens um 70°C, bevorzugter mindestens um 85°C höher als die Glasübergangstemperatur (T_{g}), und eine Länge der ersten Abkühlzone (12) so auf die Fördergeschwindigkeit der Fördereinrichtung abgestimmt ist, dass die Temperatur der Glasbehälter (2) in der ersten Abkühlzone (12) während einer Zeitdauer von maximal 25s, bevorzugter während einer Zeitdauer von maximal 20s, höher ist als die Glasübergangstemperatur (T_{g}),
vorzugsweise wobei die Heizeinrichtungen in der Heizzone (11) so ausgelegt sind, dass in der Heizzone eine Umgebungstemperatur von mindestens 590°C, bevorzugt von mindestens 605°C und noch bevorzugter von mindestens 640°C erreichbar ist.

4. Vorrichtung nach einem der vorhergehenden Ansprüche, wobei die Länge der ersten Abkühlzone (12) so auf die Fördergeschwindigkeit der Fördereinrichtung abgestimmt ist, dass die Glasbehälter in der ersten Abkühlzone (12) auf eine Temperatur abkühlen, die dem unteren Kühlpunkt entspricht oder geringfügig niedriger als dieser ist, wobei der untere Kühlpunkt insbesondere der Glasübergangstemperatur (T_{G}) entspricht,
vorzugsweise wobei die erste Abkühlzone (12) in mindestens zwei, bevorzugt in mindestens drei Abkühl-Unterzonen (IIa, IIb, IIc) mit jeweils zugeordneten kombinierten Heiz- und Kühleinrichtungen (31, 35, 39) unterteilt ist.

5. Vorrichtung nach Anspruch 4, wobei die Abkühl-Unterzonen (IIa, IIb, IIc) der ersten Abkühlzone (12) voneinander mittels thermischer Abtrennungen thermisch getrennt sind, insbesondere mittels Blechen oder Platten, die eine Konvektion zwischen den Abkühl- Unterzonen (IIa, IIb, IIc) der ersten Abkühlzone (12) unterbinden oder zumindest deutlich reduzieren, wobei die kombinierten Heiz- und Kühleinrichtungen (31, 35, 39) so ausgelegt sind, dass eine Temperaturdifferenz zwischen der Umgebungstemperatur in einer, in Förderrichtung (x) betrachtet, ersten Abkühl-Unterzone (IIa) und der Umgebungstemperatur in der Heizzone (11) größer ist als eine Temperaturdifferenz zwischen der Umgebungstemperatur der in Förderrichtung (x) betrachtet, ersten Abkühl-Unterzone (IIa) und einer benachbarten zweiten Abkühl-Unterzone (IIb) oder eine Temperaturdifferenz der Temperaturen von zwei benachbarten Abkühl-Unterzonen (IIb, IIc).

6. Vorrichtung nach einem der vorhergehenden Ansprüche, wobei die zweite Abkühlzone (13) in mindestens zwei, bevorzugt in mindestens drei Abkühl-Unterzonen mit jeweils zugeordneten Kühlmodulen (50-52) unterteilt ist, die jeweils so ausgelegt sind und die zweite Abkühlrate in der zweiten Abkühlzone (13) einstellen, dass der Aufbau von zusätzlichen Spannungen im Glas der Glasbehälter beim Abkühlen in der zweiten Abkühlzone (13) vermieden ist,
vorzugsweise wobei den Kühlmodulen (50-52) zumindest ein geschlossener Luftkreislauf zugeordnet ist, um die Temperatur in der zweiten Abkühlzone (13; IV) unter Vermeidung des Einbringens von Verunreinigungen abzusenken,
weiter vorzugsweise wobei ein Luftstrom in dem geschlossenen Luftkreislauf variierbar ist und/oder Wärmetauscher hinzuschaltbar sind, um die zweite Abkühlrate durch Variieren des Luftstroms in dem geschlossenen Luftkreislauf und/oder durch Hinzuschaltung von Wärmetauschern geeignet einzustellen.

7. Vorrichtung nach Anspruch 6, weiterhin umfassend eine Luftfiltervorrichtung, um den Luftstrom in dem geschlossenen Luftkreislauf zu filtern und eine Partikellast in der zweiten Abkühlzone (13; IV) zu reduzieren.

8. Vorrichtung nach einem der vorhergehenden Ansprüche, wobei die Länge der ersten Abkühlzone (12) und/oder der zweiten Abkühlzone (13) so auf die Fördergeschwindigkeit der Fördereinrichtung abgestimmt ist, dass eine Verweildauer der Glasbehälter
in der ersten Abkühlzone (12) im Bereich zwischen 73 s und 93 s, bevorzugter im Bereich zwischen 78 s und 88 s liegt, und/oder
in der zweiten Abkühlzone (13) im Bereich zwischen 87 s und 117 s, bevorzugter im Bereich zwischen 95 s und 109 s liegt.

9. Verfahren zur kontinuierlichen Wärmebehandlung von pharmazeutischen Glasbehältem (2), insbesondere unter Verwendung der Vorrichtung nach einem der Ansprüche 1 bis 7, bei welchem Verfahren die Glasbehälter (2) kontinuierlich von einem Eintrittsbereich (3) zu einem Austrittsbereich (4) gefördert werden, wobei die Glasbehälter zwischen dem Eintrittsbereich (3) und dem Austrittsbereich (4)
zunächst eine Heizzone (11; I, II) durchlaufen, in der die Glasbehälter auf eine maximale Temperatur erwärmt werden, und
im Anschluss an die Heizzone eine erste Abkühlzone (12; III) durchlaufen, in der die Glasbehälter mit einer ersten Abkühlrate abkühlen;
wobei die Glasbehälter (2) mittels einer Fördereinrichtung (6) gefördert werden, wobei zumindest eine Trennplatte (20, 25, 30, 43) aus einem elektrisch leitfähigen Material oberhalb der Fördereinrichtung (6) oder oberhalb und unterhalb der Fördereinrichtung (6) vorgesehen ist, um die Glasbehälter (2) in der Heizzone (11) und zumindest in der ersten Abkühlzone (12) von Heizeinrichtungen (22, 27, 42a, 42b, 42c) oder kombinierten Heiz- und Kühleinrichtungen (31, 36, 39) zu trennen, wobei die zumindest eine Trennplatte (20, 25, 30, 43) durch die Heizeinrichtungen (22, 27, 42a, 42b, 42c) oder kombinierten Heiz- und Kühleinrichtungen (31, 36, 39) induktiv erwärmt wird, um den Glasbehältem (2) in der Heizzone (11) und zumindest in der ersten Abkühlzone (12) Wärme zuzuführen.

10. Verfahren nach Anspruch 9, wobei die Glasbehälter (2) im Anschluss an die erste Abkühlzone (12; III) und vor Erreichen des Austrittsbereichs (4) eine zweite Abkühlzone (13; IV) durchlaufen, in der die Glasbehälter mit einer zweiten Abkühlrate abkühlen, die höher ist als die erste Abkühlrate,
und/oder wobei die Umgebungstemperatur in der Heizzone (11) mindestens um 70°C, bevorzugter mindestens um 85°C höher als die Glasübergangstemperatur (T_{g}) ist, und wobei die Temperatur der Glasbehälter (2) in der Heizzone während einer Zeitdauer von maximal 25 s, bevorzugter während einer Zeitdauer von maximal 20 s, höher ist als die Glasübergangstemperatur (T_{g}).

11. Verfahren nach Anspruch 9 oder 10, wobei die Glasbehälter in der ersten Abkühlzone (12) auf eine Temperatur abkühlen, die dem unteren Kühlpunkt entspricht oder geringfügig niedriger als dieser ist, wobei der untere Kühlpunkt insbesondere der Glasübergangstemperatur (T_{G}) entspricht,
vorzugsweise wobei die erste Abkühlzone (12) in mindestens zwei, bevorzugt in mindestens drei Abkühl-Unterzonen (IIa, IIb, IIc) mit jeweils konstanten Temperaturen von zugeordneten kombinierten Heiz- und Kühleinrichtungen (31, 35, 39) unterteilt ist, in denen die Temperatur der Glasbehälter schrittweise in den Bereich des unteren Kühlpunktes abgesenkt wird.

12. Verfahren nach Anspruch 11, wobei die Abkühl-Unterzonen (IIa, IIb, IIc) der ersten Abkühlzone (12) voneinander thermisch getrennt sind, wobei eine Temperaturdifferenz zwischen der Temperatur einer, in Förderrichtung (x) betrachtet, ersten kombinierten Heiz- und Kühleinrichtung (31) und der Temperatur von Heizeinrichtungen in der Heizzone (11) größer ist als eine Temperaturdifferenz zwischen der Temperatur der in Förderrichtung (x) betrachtet, ersten kombinierten Heiz- und Kühleinrichtung (31) und einer benachbarten zweiten kombinierten Heiz- und Kühleinrichtung (35) oder eine Temperaturdifferenz der Temperaturen von zwei benachbarten kombinierten Heiz- und Kühleinrichtungen (31, 35, 39).

13. Verfahren nach einem der Ansprüche 9 bis 12, wobei die zweite Abkühlrate in der zweiten Abkühlzone (13) so eingestellt ist, dass der Aufbau von zusätzlichen Spannungen im Glas der Glasbehälter beim Abkühlen in der zweiten Abkühlzone (13) vermieden ist,
und/oder wobei die Temperatur in der zweiten Abkühlzone (13) durch einen geschlossenen Luftkreislauf abgesenkt wird,
vorzugsweise wobei die zweite Abkühlrate durch Variieren eines Luftstroms in dem geschlossenen Luftkreislauf und/oder durch Hinzuschaltung von Wärmetauschern geeignet eingestellt wird.

14. Verfahren nach Anspruch 13, wobei ein Luftstrom in dem geschlossenen Luftkreislauf gefiltert wird, um eine Partikellast in der zweiten Abkühlzone (13; IV) zu reduzieren.

15. Verfahren nach einem der Ansprüche 9 bis 14, wobei eine Verweildauer der Glasbehälter
in der ersten Abkühlzone (12) im Bereich zwischen 73 s und 93 s, bevorzugter im Bereich zwischen 78 s und 88 s liegt, und/oder
in der zweiten Abkühlzone (13) im Bereich zwischen 87 s und 117 s, bevorzugter im Bereich zwischen 95 s und 109 s liegt.

## Claims

1. Device for continuously thermally processing pharmaceutical glass containers (2), having
a housing (60, 61) in which a continuous conveying gap (5) is formed between an inlet region (3) and an outlet region (4), a conveying device (6) which is configured so that the glass containers (2) are positioned without any mutual contact on an upper side of a driven conveying means of the conveying device and are continuously conveyed from the inlet region (3) to the outlet region (4) in a conveying direction (x),
a heating zone (11) which is configured so that the glass containers when passing through the conveying gap in the heating zone (11) are heated to a maximum temperature,
a first cooling zone (12) which, when viewed in the conveying direction (x), directly adjoins the heating zone (11) and is configured so that the glass containers when passing through the conveying gap in the first cooling zone (12) cool at a first cooling rate,
and at least one separation plate (20, 25, 30, 43) which is provided above the conveying device (6) or above and below the conveying device (6) in order to separate the glass containers (2) in the heating zone (11) and at least in the first cooling zone (12) from heating devices (22, 27, 42a, 42b, 42c) or combined heating and cooling devices (31, 36, 39) and to prevent the introduction of impurities into the conveying gap from above the conveying device (6) or from above and below the conveying device (6),
**characterised in that** the at least one separation plate (20, 25, 30, 43) comprises an electrically conductive material in order to be inductively heated by the heating devices (22, 27, 42a, 42b, 42c) or combined heating and cooling devices (31, 36, 39) and to supply heat to the glass containers (2) in the heating zone (11) and at least in the first cooling zone (12).

2. Device according to claim 1, wherein the at least one separation plate (20, 25, 30, 43) is arranged at a spacing of a maximum of 20 cm, preferably a maximum of 10 cm, with respect to the conveying device (6),
and/or further comprising a second cooling zone (13) which directly adjoins the first cooling zone (12) and which is configured so that the glass containers when passing through the conveying gap in the second cooling zone (13) cool at a second cooling rate which is higher than the first cooling rate.

3. Device according to claim 2, wherein the heating devices in the heating zone (11) are configured in such a manner that an ambient temperature in the heating zone can be reached which is at least 70°C, more preferably at least 85°C higher than the glass transition temperature (T_{g}) and a length of the first cooling zone (12) is adapted to the conveying speed of the conveying device in such a manner that the temperature of the glass containers (2) in the first cooling zone (12) for a time of a maximum of 25 sec., more preferably for a time of a maximum of 20 sec., is higher than the glass transition temperature (T_{g}),
preferably wherein the heating devices in the heating zone (11) are configured in such a manner that in the heating zone an ambient temperature of at least 590°C, preferably of at least 605°C and even more preferably of at least 640°C can be reached.

4. Device according to any one of the preceding claims, wherein the length of the first cooling zone (12) is adapted to the conveying speed of the conveying device in such a manner that the glass containers in the first cooling zone (12) cool to a temperature which corresponds to the lower cooling point or is slightly lower than it, wherein the lower cooling point in particular corresponds to the glass transition temperature (T_{G}),
preferably wherein the first cooling zone (12) is subdivided into at least two, preferably into at least three cooling sub-zones (IIa, IIb, IIc) each having associated combined heating and cooling devices (31, 35, 39).

5. Device according to claim 4, wherein the cooling sub-zones (IIa, IIb, IIc) of the first cooling zone (12) are thermally separated from each other by means of thermal separations, in particular by means of metal sheets or plates, which prevent or at least significantly reduce a convection between the cooling sub-zones (IIa, IIb, IIc) of the first cooling zone (12), wherein the combined heating and cooling devices (31, 35, 39) are configured in such a manner that a temperature difference between the ambient temperature in a, when viewed in the conveying direction (x), first cooling sub-zone (IIa) and the ambient temperature in the heating zone (11) is greater than a temperature difference between the ambient temperature of the, when viewed in the conveying direction (x), first cooling sub-zone (IIa) and an adjacent second cooling sub-zone (IIb) or a temperature difference of the temperatures of two adjacent cooling sub-zones (IIb, IIc).

6. Device according to any one of the preceding claims, wherein the second cooling zone (13) is subdivided into at least two, preferably into at least three cooling sub-zones each having associated cooling modules (50-52) which are each configured and which adjust the second cooling rate in the second cooling zone (13) in such a manner that the build-up of additional tensions in the glass of the glass containers during cooling in the second cooling zone (13) is prevented, preferably wherein there is associated with the cooling modules (50-52) at least one closed air circuit in order to reduce the temperature in the second cooling zone (13; IV) while preventing the introduction of impurities,
in a further preferred manner wherein an air flow in the closed air circuit can be varied and/or heat exchangers can be added in order to adjust the second cooling rate by varying the air flow in the closed air circuit and/or by adding heat exchangers in an appropriate manner.

7. Device according to claim 6, further comprising an air filter device in order to filter the air flow in the closed air circuit and to reduce a particle load in the second cooling zone (13; IV).

8. Device according to any one of the preceding claims, wherein the length of the first cooling zone (12) and/or the second cooling zone (13) is adapted to the conveying speed of the conveying device in such a manner that a dwell time of the glass containers
in the first cooling zone (12) is in the range between 73 sec. and 93 sec., more preferably in the range between 78 sec. and 88 sec., and/or
in the second cooling zone (13) is in the range between 87 sec. and 117 sec., more preferably in the range between 95 sec. and 109 sec.

9. Method for continuously thermally processing pharmaceutical glass containers (2), in particular using the device according to any one of claims 1 to 7, in which method the glass containers (2) are continuously conveyed from an inlet region (3) to an outlet region (4), wherein the glass containers between the inlet region (3) and the outlet region (4)
first pass through a heating zone (11; I, II) in which the glass containers are heated to a maximum temperature, and, following the heating zone, pass through a first cooling zone (12; III) in which the glass containers cool at a first cooling rate;
wherein the glass containers (2) are conveyed by means of a conveying device (6), wherein at least one separation plate (20, 25, 30, 43) made of an electrically conductive material is provided above the conveying device (6) or above and below the conveying device (6) in order to separate the glass containers (2) in the heating zone (11) and at least in the first cooling zone (12) from heating devices (22, 27, 42a, 42b, 42c) or combined heating and cooling devices (31, 36, 39), wherein the at least one separation plate (20, 25, 30, 43) is inductively heated by the heating devices (22, 27, 42a, 42b, 42c) or combined heating and cooling devices (31, 36, 39) in order to supply heat to the glass containers (2) in the heating zone (11) and at least in the first cooling zone (12).

10. Method according to claim 9, wherein the glass containers (2) following the first cooling zone (12; III) and before reaching the outlet region (4) pass through a second cooling zone (13; IV) in which the glass containers cool at a second cooling rate which is higher than the first cooling rate, and/or wherein the ambient temperature in the heating zone (11) is at least 70°C, preferably at least 85°C higher than the glass transition temperature (T_{G}) and wherein the temperature of the glass containers (2) in the heating zone is higher than the glass transition temperature (T_{G}) for a time of a maximum of 25 sec., more preferably for a time of a maximum of 20 sec.

11. Method according to claim 9 or 10, wherein the glass containers in the first cooling zone (12) cool to a temperature which corresponds to the lower cooling point or which is slightly lower than it, wherein the lower cooling point in particular corresponds to the glass transition temperature (T_{G}),
preferably wherein the first cooling zone (12) is subdivided into at least two, preferably into at least three cooling sub-zones (IIa, IIb, IIc) each having constant temperatures of associated combined heating and cooling devices (31, 35, 39) in which the temperature of the glass containers is gradually reduced into the range of the lower cooling point.

12. Method according to claim 11, wherein the cooling sub-zones (IIb, IIb, IIc) of the first cooling zone (12) are thermally separated from each other, wherein a temperature difference between the temperature of a, when viewed in the conveying direction (x), first combined heating and cooling device (31) and the temperature of heating devices in the heating zone (11) is greater than a temperature difference between the temperature of the, when viewed in the conveying direction (x), first combined heating and cooling device (31) and an adjacent second combined heating and cooling device (35) or a temperature difference of the temperatures of two adjacent combined heating and cooling devices (31, 35, 39).

13. Method according to any one of claims 9 to 12, wherein the second cooling rate in the second cooling zone (13) is adjusted in such a manner that the build-up of additional tensions in the glass of the glass containers during cooling in the second cooling zone (13) is prevented,
and/or wherein the temperature in the second cooling zone (13) is reduced by a closed air circuit,
preferably wherein the second cooling rate is adjusted in an appropriate manner by varying an air flow in the closed air circuit and/or by adding heat exchangers.

14. Method according to claim 13, wherein an air flow in the closed air circuit is filtered in order to reduce a particle load in the second cooling zone (13; IV).

15. Method according to any one of claims 9 to 14, wherein a dwell time of the glass containers
in the first cooling zone (12) is in the range between 73 sec. and 93 sec., more preferably in the range between 78 sec. and 88 sec., and/or
in the second cooling zone (13) is in the range between 87 sec. and 117 sec., more preferably in the range between 95 sec. and 109 sec.

## Revendications

1. Dispositif de traitement thermique continu de récipients pharmaceutiques en verre (2), avec
un boîtier (60, 61) dans lequel un interstice de convoyage continu (5) est formé entre une zone d'entrée (3) et une zone de sortie (4),
un dispositif de convoyage (6) qui est conçu de façon à ce que les récipients en verre (2) s'appuient sans contact mutuel sur un côté supérieur d'un moyen de convoyage du dispositif de convoyage et soient convoyés de manière continue de la zone d'entrée (3) vers la zone de sortie (4) dans une direction de convoyage (x),
une zone de chauffage (11) qui est conçue de façon à ce que les récipients en verre soient chauffés, dans la zone de chauffage (11), lors de la traversée de l'interstice de convoyage, à une température maximale,
une première zone de refroidissement (12) qui, vue dans la direction de convoyage (x), suit immédiatement la zone de chauffage (11) et qui est conçue de façon à ce que les récipients en verre se refroidissent dans la première zone de refroidissement (12) lors de la traversée de l'interstice de convoyage, avec un premier taux de refroidissement,
et au moins une plaque de séparation (20, 25, 30, 43) qui est disposée au-dessus du dispositif de convoyage (6) ou au-dessus et en dessous du dispositif de convoyage (6), afin de séparer les récipients en verre (2) dans la zone de chauffage (11) et au moins dans la première zone de refroidissement (12) des dispositifs de chauffage (22, 27, 42a, 42b, 42c) ou de dispositifs combinés de chauffage et de refroidissement (31, 36, 39) et d'empêcher l'entrée d'impuretés dans l'interstice de convoyage par-dessus le dispositif de convoyage (6) ou par-dessus et par-dessous le dispositif de convoyage (6),
**caractérisé en ce que**
l'au moins une plaque de séparation (20, 25, 30, 43) est constituée d'un matériau électro-conducteur afin d'être chauffée de manière inductive par les dispositifs de chauffage (22, 27, 42a, 42b, 42c) ou les dispositifs combinés de chauffage et de refroidissement (31, 36, 39) et d'apporter de la chaleur aux récipients en verre (2) dans la zone de chauffage (11) et au moins dans la première zone de refroidissement (12).

2. Dispositif selon la revendication 1, dans lequel l'au moins une plaque de séparation (20, 25, 30, 43) est disposée à une distance de 20 cm maximum, de préférence de 10 cm maximum du dispositif de convoyage (6),
et/ou comprenant en outre une deuxième zone de refroidissement (13) qui suit immédiatement la première zone de refroidissement (12) et qui est conçue de façon à ce que les récipients en verre se refroidissent, lors de la traversée de l'interstice de convoyage, dans la deuxième zone de refroidissement (13) avec un deuxième taux de refroidissement qui est supérieur au premier taux de refroidissement.

3. Dispositif selon la revendication 2, dans lequel les dispositifs de chauffage de la zone de chauffage (11) sont conçus de façon à ce qu'une température ambiante dans la zone de chauffage peut être atteinte, qui est supérieure d'au moins 70 °C, de préférence d'au moins 85 °C, à la température de transition vitreuse (T_{g}) et une longueur de la première zone de refroidissement (12) est adaptée à la vitesse de convoyage du dispositif de convoyage de façon à ce que la température des récipients en verre (2) dans la première zone de refroidissement (12) soit supérieure à la température de transition vitreuse (T_{g}) pendant une durée de 25 s maximum, de préférence pendant une durée de 20 s maximum,
de préférence dans lequel les dispositifs de chauffage de la zone de chauffage (11) sont conçus de façon à ce que, dans la zone de chauffage, une température ambiante d'au moins 590 °C, de préférence d'au moins 605 °C et encore plus de préférence d'au moins 640 °C puisse être atteinte.

4. Dispositif selon l'une des revendications précédentes, dans lequel la longueur de la première zone de refroidissement (12) est adaptée à la vitesse de convoyage du dispositif de convoyage de façon à ce que les récipients en verre dans la première zone de refroidissement (12) se refroidissent à une température qui correspond au point de refroidissement inférieur ou qui est légèrement inférieure à celui-ci, dans lequel le point de refroidissement inférieur correspond plus particulièrement à la température de transition vitreuse (T_{G}),
de préférence dans lequel la première zone de refroidissement (12) est divisée en au moins deux, de préférence en au moins trois sous-zones de refroidissement (IIa, IIb, IIc) avec chacune des dispositifs combinés de chauffage et de refroidissement (31, 35, 39) correspondants.

5. Dispositif selon la revendication 4, dans lequel les sous-zones de refroidissement (IIa, IIb, IIc) de la première zone de refroidissement (12) sont isolées thermiquement les unes des autres au moyen d'isolations thermiques, plus particulièrement au moyen de tôles ou de plaques qui interdisent ou au moins réduisent nettement une convection entre les sous-zones de refroidissement (IIa, IIb, IIc) de la première zone de refroidissement (12), dans lequel les dispositifs de chauffage et de refroidissement combinés (31, 35, 39) sont conçus de façon à ce qu'une différence de température entre la température ambiante dans une première sous-zone de refroidissement (IIa), vue dans la direction de convoyage (x), et la température ambiante dans la zone de chauffage (11) soit supérieure à une différence de température entre la température ambiante dans une première sous-zone de refroidissement (IIa), vue dans la direction de convoyage (x) et une deuxième sous-zone de refroidissement (IIb) adjacente ou une différence de température entre les températures de deux sous-zone de refroidissement (IIb, IIc) adjacentes.

6. Dispositif selon l'une des revendications précédentes, dans lequel la deuxième zone de refroidissement (13) est divisée en au moins deux, de préférence en au moins trois sous-zones de refroidissement avec chacune des modules de refroidissement (50 - 52) correspondants, qui sont conçues chacune et qui ajustent le deuxième taux de refroidissement dans la deuxième zone de refroidissement (13) de façon à éviter l'apparition de contraintes supplémentaires dans le verre des récipients en verre lors du refroidissement dans la deuxième zone de refroidissement (13),
de préférence dans lequel, aux modules de refroidissement (50 - 52) correspond au moins un circuit d'air fermé afin d'abaisser la température dans la deuxième zone de refroidissement (13 ; IV) tout en empêchant la pénétration d'impuretés,
de préférence dans lequel un flux d'air dans le circuit d'air fermé peut varier et/ou des échangeurs thermiques peuvent être ajoutés afin d'ajuster le deuxième taux de refroidissement en faisant varier le flux d'air dans le circuit d'air fermé et/ou par l'ajout d'échangeurs thermiques.

7. Dispositif selon la revendication 6, comprenant en outre un dispositif de filtrage d'air afin de filtrer le flux d'air dans le circuit d'air fermé et de réduire la teneur en particules dans la deuxième zone de refroidissement (13 ; IV).

8. Dispositif selon l'une des revendications précédentes, dans lequel la longueur de la première zone de refroidissement (12) et/ou de la deuxième zone de refroidissement (13) est adaptée à la vitesse de convoyage du dispositif de convoyage de façon à ce qu'une durée de séjour des récipients en verre
dans la première zone de refroidissement (12) se trouve dans un intervalle entre 73 s et 93 s, de préférence dans un intervalle entre 78 s et 88 s et/ou
dans la deuxième zone de refroidissement (13) se trouve dans un intervalle entre 87 s et 117 s, de préférence dans un intervalle entre 95 s et 109 s.

9. Procédé de traitement thermique en continu de récipients pharmaceutiques en verre (2), plus particulièrement à l'aide du dispositif selon l'une des revendications 1 à 7, les récipients en verre (2) étant, dans ce procédé, convoyés de manière continue d'une zone d'entrée (3) vers une zone de sortie (4), dans lequel les récipients en verre traversent, entre la zone d'entrée (3) et la zone de sortie (4),
d'abord une zone de chauffage (11 ; I, II) dans laquelle les récipients en verre sont chauffés à une température maximale, et
après la zone de chauffage, une première zone de refroidissement (12 ; II) dans laquelle les récipients en verre se refroidissent avec un premier taux de refroidissement ;
dans lequel les récipients en verre (2) sont convoyés au moyen d'un dispositif de convoyage (6), dans lequel au moins une plaque de séparation (20, 25, 30, 43), constituée d'un matériau électro-conducteur, est disposée au-dessus du dispositif de convoyage (6) ou au-dessus et en dessous du dispositif de convoyage (6), afin de séparer les récipients en verre (2) dans la zone de chauffage (11) et au moins dans la première zone de refroidissement (12) de dispositifs de chauffage (22, 27, 42a, 42b, 42c) ou de dispositifs combinés de chauffage et de refroidissement (31, 36, 39), dans lequel l'au moins une plaque de séparation (20, 25, 30, 43) est chauffée de manière inductive par les dispositifs de chauffage (22, 27, 42a, 42b, 42c) ou les dispositifs combinés de chauffage et de refroidissement (31, 36, 39), afin d'apporter de la chaleur aux récipients en verre (2) dans la zone de chauffage (11) et au moins dans la première zone de refroidissement (12).

10. Procédé selon la revendication 9, dans lequel les récipients en verre (2) traversent, après la première zone de refroidissement (12 ; III) et avant d'atteindre la zone de sortie (4), une deuxième zone de refroidissement (13 ; IV) dans laquelle les récipients en verre se refroidissent avec un deuxième taux de refroidissement qui est supérieur au premier taux de refroidissement,
et/ou dans lequel la température ambiante dans la zone de chauffage (11) est supérieure d'au moins 70 °C, de préférence d'au moins 85 °C, à la température de transition vitreuse (T_{g}) et dans lequel la température des récipients en verre (2) dans zone de chauffage est supérieure à la température de transition vitreuse (T_{g}) pendant une durée de 25 s maximum, de préférence pendant une durée de 20 s maximum.

11. Procédé selon la revendication 9 ou 10, dans lequel les récipients en verre dans la première zone de refroidissement (12) se refroidissent à une température qui correspond au point de refroidissement inférieur ou qui est légèrement inférieure à celui-ci, dans lequel le point de refroidissement inférieur correspond plus particulièrement à la température de transition vitreuse (T_{G}),
de préférence dans lequel la première zone de refroidissement (12) est divisée en au moins deux, de préférence en au moins trois sous-zones de refroidissement (IIa, IIb, IIc) avec chacune des dispositifs combinés de chauffage et de refroidissement (31, 35, 39) correspondants, dans lesquels la température des récipients en verre est abaissée par paliers jusqu'au niveau du point de refroidissement inférieur.

12. Procédé selon la revendication 11, dans lequel les sous-zones de refroidissement (IIa, IIb, IIc) de la première zone de refroidissement (12) sont isolées thermiquement les unes des autres au moyen d'isolations thermiques, dans lequel une différence de température entre la température d'un premier dispositif de combiné de chauffage et de refroidissement (31), vu dans la direction de convoyage (x), et la température de dispositifs de chauffage de la zone de chauffage (11) est supérieure à une différence de température entre la température du premier dispositif de combiné de chauffage et de refroidissement (31), vu dans la direction de convoyage (x), et un deuxième dispositif combiné de chauffage et de refroidissement (35) adjacent ou une différence de température de deux dispositifs combinés de chauffage et de refroidissement (31, 35, 39) adjacents.

13. Procédé selon l'une des revendications 9 à 12, dans lequel le deuxième taux de refroidissement dans la deuxième zone de refroidissement (13) est ajusté de façon à éviter l'apparition de contraintes supplémentaires dans le verre des récipients en verre lors du refroidissement dans la deuxième zone de refroidissement (13),
et/ou dans lequel la température dans la deuxième zone de refroidissement (13) est abaissée par un circuit d'air fermé,
de préférence dans lequel le deuxième taux de refroidissement est ajusté en faisant varier un flux d'air dans le circuit d'air fermé et/ou en ajoutant des échangeurs thermiques.

14. Procédé selon la revendication 13, dans lequel un flux d'air dans le circuit d'air fermé est filtré afin de réduire la teneur en particules dans la deuxième zone de refroidissement (13 ; IV).

15. Procédé selon l'une des revendications 9 à 14, dans lequel une durée de séjour des récipients en verre
dans la première zone de refroidissement (12) se trouve dans un intervalle entre 73 s et 93 s, de préférence dans un intervalle entre 78 s et 88 s et/ou
dans la deuxième zone de refroidissement (13) se trouve dans un intervalle entre 87 s et 117 s, de préférence dans un intervalle entre 95 s et 109 s.
